Europäisches Patentamt

European Patent Office

Office européen des brevets

(11) Publication number: **0 167 816**
**A2**

(12) # EUROPEAN PATENT APPLICATION

(21) Application number: 85106877.5

(22) Date of filing: 04.06.85

(51) Int. Cl.⁴: **G 01 N 21/31**
G 01 N 33/48, G 01 J 3/42

(30) Priority: 13.06.84 US 620059

(43) Date of publication of application:
15.01.86 Bulletin 86/3

(84) Designated Contracting States:
BE DE FR GB IT NL

(71) Applicant: ABBOTT LABORATORIES
14th Street and Sheridan Road North St
North Chicago Illinois 60064(US)

(72) Inventor: Wallace, Patrick Bryan
521 Ruiduso West
Saginaw Texas 76179(US)

(72) Inventor: Lingenfelter, Keith Maynard
7605 Mullrany Drive
Dallas Texas 75248(US)

(74) Representative: Modiano, Guido et al,
MODIANO, JOSIF, PISANTY & STAUB Modiano &
Associati Via Meravigli, 16
I-20123 Milan(IT)

(54) Fluid analyzing apparatus with offset correction means.

(57) An apparatus for analyzing the constituents of a fluid such as blood serum utilizing optical means. The apparatus includes operational amplifiers which produce corrected information signals, thereby reliably compensating for certain errors that are inherently present in apparatus of this type.

FIG. 1

EP 0 167 816 A2

-1-

## FLUID ANALYZING APPARATUS
## WITH OFFSET CORRECTION MEANS

### BACKGROUND OF THE INVENTION

This invention relates to apparatus and methods for analyzing the constituent components of a fluid such as blood serum. More particularly, this invention relates to blood serum analysis apparatus and methods which ascertain the constituent components of a blood serum sample by optical analysis at an apparatus testing station.

Apparatus of the type described conventionally utilizes a first probe for aspirating a blood serum sample and depositing such sample in a transparent laboratory vessel known as a cuvette located at the apparatus testing station. A second probe is then used to aspirate a reagent which is typically transported to the cuvette where it is contacted with the blood serum sample previously deposited therein. In accordance with techniques well known in the art, a particular reagent will bind to a predetermined constituent component of the blood serum sample, thereby isolating that component in the cuvette for subsequent optical analysis. If other components require analysis, different reagents are ordinarily utilized.

After a particular constituent component of the blood serum sample has been isolated by contacting the sample with a particular reagent, the component may be optically analyzed by applying a beam of light to the cuvette in a well known manner. The isolated constituent component of the blood serum sample in the cuvette absorbs some of this light at different wavelengths, depending upon the characteristics of the sample. The alternated light beam, upon emerging from the sample under analysis, typically passes through optical means which causes this light beam to be diffracted into a plurality of discrete rays characterized by different wavelengths. These different light rays, each characterized by a different wavelength, propogate at predeterminable paths relative to the optical means.

Conventional optical analysis apparatus takes advantage of the fact that these discrete rays of light propagate at predetermined positional relationships by locating light-responsive circuit elements at focusing positions along various ones of these predetermined paths. These circuit elements typically produce an electrical signal that is proportional to the intensity of the light impinging thereon. Thus, if one such circuit element is positioned to be impinged by a light ray characterized by a first wavelength, it will produce a relatively strong electrical signal if the relative intensity of that ray is strong. On the other hand, if an adjacent circuit element is positioned to be impinged by a different light ray characterized by a second wavelength, it will produce a relatively weak electrical signal if the relative intensity of that ray is weak.

The current signals produced by such circuit elements are then electrically manipulated in a well known manner to generate a signal corresponding to the absorptance of the light applied to the particular constituent component isolated in the cuvette. This signal is indicative of the characteristics of that component. Moreover, this signal can be further manipulated by other electronic circuitry under the control of a microprocessor, for example, to provide a digital output that can be visually displayed in human-readable form.

Though optical fluid analyzers of the type described have been used successfully, they are subject to certain drawbacks and deficiencies. One problem that adversely affects the operation of many such analyzers relates to the fact that the signals generated by the light responsive circuit elements are subject to certain inherent errors due to bias voltages, spurious signals and the like. Efforts to overcome these problems have heretofore involved the use potentiometers to adjust certain circuit parameters to compensate for these inherent errors. This effort has not been entirely satisfactory because potentiometers and other circuit components are themselves subject to substantial drift and concomitant errors. For example, not only do the circuit characteristics of potentiometers vary with age, they change substantially with variations in temperature.

It is thus a primary object of this invention to provide an improved apparatus for analyzing fluids such as a blood serum. It is a further object of this invention to provide improvements in such apparatus, whereby many of the errors inherent in such apparatus are offset and otherwise compensated for in an accurate, reliable manner. It is yet another object of this invention to provide improved methods for accomplishing this analysis. Other objects of the invention, along with many benefits, features and advantages, will be apparent upon reading the detailed description of the invention summarized below.

## SUMMARY OF THE INVENTION

The foregoing objects of the invention are achieved in an apparatus for analyzing constituent components of a fluid by exposing a substantially isolated component of the fluid to a beam of light for optical analysis. The apparatus comprises light responsive means responsive to the beam of light for producing first and second information signals having parameters corresponding to the effects of the beam passing through the component at different selected wavelengths. Electronic means produce first and second offset signals having parameters corresponding to errors in the information signals.

First signal operation means, having a first input coupled to the light responsive means for receiving the first information signal, and a second input coupled to the electronic means for receiving the first offset signal, produce at its output a first corrected information signal. Similarly, second signal operation means, having a first input coupled to the light responsive means for receiving the second information signal, and a second input coupled to the electronic means for receiving the second offset signal, produce at its output a second corrected information signal.

The improved apparatus may further include signal generation means having a first input coupled to the output of the first signal operation means for receiving the first corrected information signal, and a second input coupled to the output of the second signal operation means for receiving the second corrected information signal. The signal generation means produces at its output a signal corresponding to the absorptance of the component of the fluid, and hence is indicative of the analysis of such component.

In another aspect of this invention there is disclosed a method for analyzing the constituent components of a fluid by exposing a substantially isolated component of the fluid to a beam of light and diffracting that light into discrete rays, each having a different wavelength. The method includes the steps of producing a first and a second information signal, each having a parameter corresponding to the intensity of a different one of the diffracted rays. First and second offset signals, each having a parameter corresponding, respectively, to errors in the first and second information signals, are locally generated. First and second corrected information signals are produced which correspond, respectively, to the differences between the parameters of the first information signal and the first offset signal, and the parameters of the second information signal and the second offset signal. The corrected information signals are applied to means for producing an output signal indicative of the isolated component under analysis. This output signal typically corresponds to the logarithm of the ratio of the first and second corrected information signals.

## BRIEF DESCRIPTION OF THE DRAWINGS

An exemplary embodiment of the invention summarized above is shown in the accompany drawings wherein:

FIGURE 1 is a schematic diagram representing the application of a beam of light to an isolated component of a sample of blood serum to be optically analyzed;

FIGURE 2 is a block diagram representing an exemplary embodiment of the present invention; and

FIGURE 3 is a more detailed block diagram of the invention represented in FIGURE 2.

## DETAILED DESCRIPTION OF EXEMPLARY
## EMBODIMENTS OF THE INVENTION

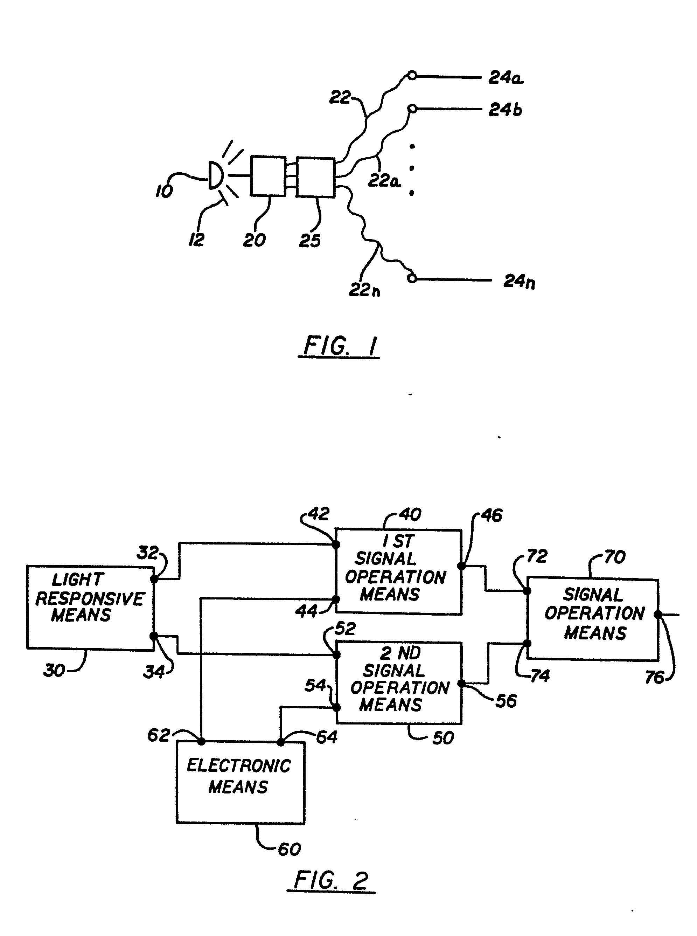

Referring now to FIGURE 1 there is illustrated in schematic form a light source 10 producing a beam of light 12. Though represented in schematic form, it will be understood by those skilled in the art that source 10 includes all necessary optical elements such as filters, light passages, etc. to provide the beam of light 12 that is required to permit optical analysis to proceed.

Light 12 is directed from source 10 to an isolated component 20 of the blood serum sample to be analyzed. Component 20 is ordinarily contained in a transparent cuvette (not shown) through which light 12 is directed. In accordance with well known operation, some of light 12 is absorbed by component 20. Accordingly, an alternated portion of the beam of light originating from source 10 emerges from component 20 and is passed through conventional optical means 25 where it is diffracted to form a plurality of discrete light rays 22, 22a . . . 22n, each characterized by a different wavelength. Though any convenient number of discrete light rays may be utilized for purposes of analysis, this exemplary embodiment contemplates the use of 16 such rays characterized by wavelengths ranging from 604 Nm to 340 Nm.

The propogation paths of light rays 22, 22a . . . 22n relative to optical means 25 is determined by well known and well understood physical laws. Accordingly, predetermined focal positions 24, 24a . .. 24n, are defined respectively by the propogation paths of light rays 27, 22a . . . 27n. Thus, by locating a light responsive circuit element, such as a conventional photo diode, at each of positions 24, 24a . . . 24n, an electrical signal, having a parameter (such as current amplitude) corresponding to the intensity of the light impinging at any one of positions 24, 24a
. . . 24n can be generated.

A plurality of properly positioned photo diodes and related circuitry, or any other means for generating electrical information signals having a parameter corresponding to the intensity of the light impinging at any one of positions 24, 24a . . . 24n is represented by light responsive means 30 in FIGURE 2. Light responsive means 30 conventionally operating under the control of a microprocessor (not shown) typically selects two adjacent positions from among the plurality of positions 24, 24a . . . 24n, and presents the information signals generated by the light impinging at those two positions at corresponding outputs 32, 34. Thus, if adjacent positions 24 and 24a are selected, the information signal generated by the light impinging at one of those positions is applied to output 32, and the information signal generated by the light impinging at the other of those positions is applied to output 34.

Output 32 of light responsive means 30 is coupled to an input 42 of a first signal operation means 40, and output 34 is coupled to an input 52 of a second signal operation means 50. First signal operation means 40 has a second input 44 adapted to receive a first offset signal having a parameter (such as voltage amplitude) corresponding to errors inherent in the first information signal applied to input 42 of first signal operation means 40. Similarly, second signal operation means 50 has a second input 54 adapted to receive a second offset signal having a parameter (such as voltage amplitude) corresponding to errors inherent in the second information signal applied to input 52. In this exemplary embodiment both the first and second offset signals are locally generated by electronic means 60, and are presented at outputs 62, 64 respectively. The specific make-up of such offset signals is a function of the various bias voltages, spurious signals, etc. which can be predetermined and stored in memory associated with electronic means 60, all being controlled by a microprocessor.

First signal operation means 40 has an output 46 producing a first corrected information signal which, in this exemplary embodiment, corresponds to the arithmetic difference between the parameters of the first information signal applied to input 42 and the first offset signal applied to input 44. Similarly, second signal operation means 50 has an output 56 producing a second corrected information signal which, in this exemplary embodiment, corresponds to the arithmetic difference between the parameters of the second information signal applied to input 52 and the second offset signal applied to input 54.

Output 46 of first signal operation means 40 is coupled to an input 72 of signal generation means 70. Signal generation means 70 has another input 74 which is coupled to output 56 of second signal generation means 50. Signal generation means 70 has circuitry for generating, at its output 76, a signal corresponding to the logarithm of the ratio of the signals applied to inputs 72 and 74. Since this log-ratio signal is indicative of the absorptance of the light impinging adjacent focal positions after diffraction through optical means 25 via component 20, this signal is indicative of the characteristics of that component. As such, accurate analog representation of the analysis of that component, corrected for errors resulting from bias voltages, spurious signals, etc., appears at output 76. This analog representation can, of course, be applied to other circuitry (not shown) under the control of a microprocessor for producing a display of that analysis in human-readable form.

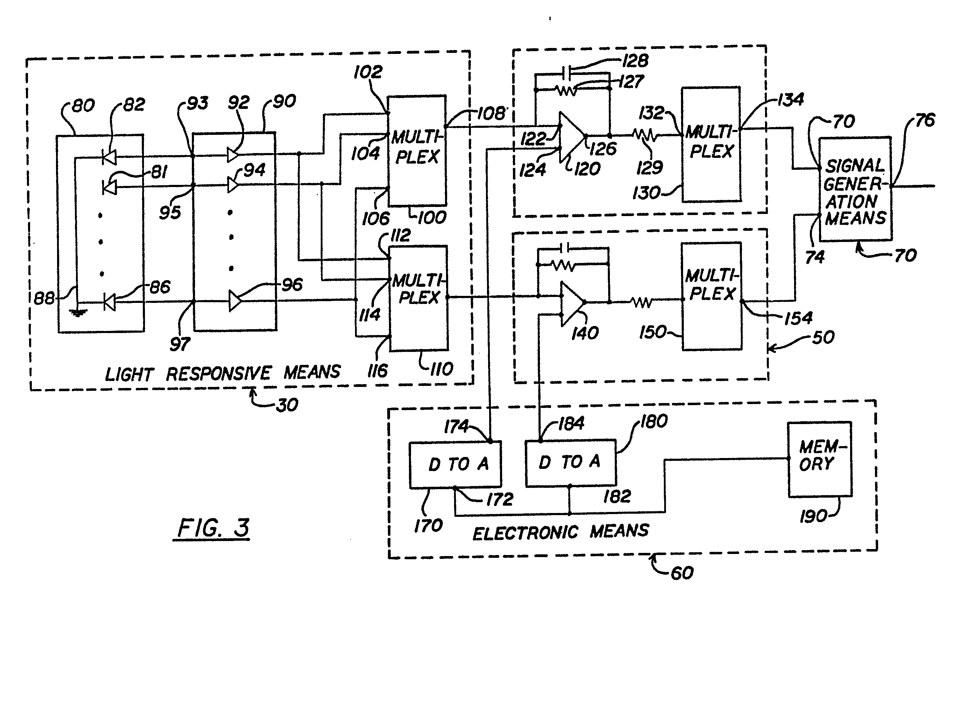

Referring now to Figure 3 light responsive means 30 are shown to include a circuit array 80, amplifier means 90 coupled to array 80, and a pair of multiplexers 100, 110 each being coupled to amplifier means 90. In this exemplary embodiment array 80 is an S1592-01 Hammamatsu diode array preferably comprising numerous photo diode elements, three of which are illustrated and represented, respectively, by reference numerals 82, 84 and 86. As previously explained in connection with the description of Figure 1, all of the diode elements in array 80 are pre-positioned in the predetermined paths of the light rays diffracted through optical means 25, and produce an electrical signal having a current amplitude corresponding to the intensity of the impinging light ray. As shown in Figure 3, each of the diodes in array 80 has its cathode coupled to ground via a conductor 88, and has its anode coupled to a respective input of amplifier means 90. Thus, in this exemplary embodiment, the anodes of diodes 82, 84 and 86 are respectively coupled to inputs 93, 95 and 97 of amplifier means 90.

Amplifier means 90 preferably comprises a group of Harris 5180 operational amplifiers which adjust the gain of the signals passed from the photo diodes comprising array 80. In this exemplary embodiment 16 amplifiers are utilized, three of which are represented by reference numerals 92, 94 and 96. Amplifiers 92, 94 and 96 are coupled, respectively, to their associated inputs 93, 95 and 97. The output of each amplifier comprising amplifier means 90 is passed to an individual input of a multiplexer 100, and is also passed to an individual input of another multiplexer 110. Multiplexers 100 and 110, which may be Precision Monolitics, Inc. (PMI) MUX 16 devices, have at least 16 inputs, three of which are represented by reference numerals 102, 104 and 106 for multiplexer 110, and reference numerals 112, 114 and 116 for multiplexer 110. Thus, in this exemplary embodiment, the output of amplifier 92 is passed to both input 102 and input 112, the output of amplifier 94 is passed to both input 104 and input 114, and the output of amplifier 96 is passed to both input 106 and input 116.

Multiplexers 100 and 110 typically operate under the control of a microprocessor to select any one of the 16 signals applied at its 16 inputs, and present that selected signal at its output. Multiplexer 100 thus presents the selected signal at its output 108 and multiplexer 110 presents the selected signal at its output 118. Typically, the signals appearing at outputs 108 and 118 of multiplexers 100 and 110, respectively, were generated by adjacent photo diode elements from array 80 in order for the apparatus to ascertain the characteristics of the particular component under analysis. These signals have been previously referred to herein as first and second information signals.

Electronic means 60 preferably includes first and second AD567 digital to analog converters 170 and 180. In this exemplary embodiment, converters 170 and 180 receive a predetermined digital error signal corresponding to the errors associated with the corresponding information signals. As previously explained these errors result from bias voltages, spurious signals and the like which are inherent in circuitry of this type. These predetermined digital error signals may be inputted and stored in a memory 190 for subsequent application to converters 170 and 180, and can thus be referred to as predetermined reference signals. As explained in connection with many of the other elements of this apparatus, memory 190 typically operates under the control of a microprocessor.

Digital to analog converter 170 converts the digital error signal supplied by memory 190 into analog form to produce an offset signal at its output 174. Similarly, digital to analog converter 180 converts the digital error signal supplied by memory 190 into analog form to produce an offset signal at its output 184. Output 174 of converter 170 may be coupled through a current to voltage converter (not shown) to first signal operation means 40, particularly an input 124 of an operational amplifier 120. In the same manner, output 184 of converter 180 may be passed through a current to voltage converter (not shown) to second signal operation means 50.

Output 108 of multiplexer 100 may be coupled through a buffer (not shown) to first signal operation means 40 which preferably includes a PMI operational amplifier 120 and a PMI multiplexer 130. Operational amplifier 120 preferably includes a pair of inputs 122, 124 and an output 126, the latter producing an output signal corresponding to the arithmetic difference between the two signals applied at inputs 122, 124. Thus, the signal produced at the output 126 of operational amplifier 120 represents the difference between the information signal applied at input 122 and the offset signal applied at input 124. This yields a corrected information signal which, upon selection by multiplexer 140, appears at output 134 thereof.

In this embodiment, gain control of amplifier 120 is provided, at least in part, by a 1 K resistor 127 parallelly coupled to a 4 micro F capacitor 128, this parallel combination being connected between input 122 and output 126. A 1 K resistor 129 is coupled between output 126 of amplifier 120 to an input 132 of multiplexer 134. Multiplexer 134, which is preferably operated under the control of a microprocessor, selects one of a plurality of signals it receives at its various inputs (for purposes of simplicity only input 132 is shown), and presents that signal at its output 134. When the signal applied at input 132 is so selected, the corrected information signal appears at output 134.

Second signal operation means 50 is essentially identical in structure and function to first signal operation means 40, and therefore a detailed description and explanation of that circuitry is unnecessary. Suffice it to say that second signal operation means 40 also includes an operational amplifier 140 and a multiplexer 150, the latter having an output 154 at which appears a second corrected information signal.

The corrected information signals appearing, respectively, at outputs 134 and 154 of first signal operation means 40 and second signal operation means 50 are applied to corresponding inputs 72 and 74 of signal generation means 70. In this exemplary embodiment, signal generation means 70 comprises a Burr-Brown log ratio amplifier. This amplifier produces at its output 76 a signal corresponding to the logarithm of the ratio of the signals applied at its inputs 72 and 74. This signal is indicative of the characteristics of the particular component then under analysis. Moreover, as explained above, this signal can be manipulated by other circuitry, all under the control of a microprocessor, for displaying these characteristics in a human-readable form.

What has been described is a novel apparatus for ascertaining the characteristics of a constituent component of a fluid such as blood serum. The circuitry employed permits the fluid to be analyzed, and the results displayed, in an accurate, reliable manner which takes into account many of the errors that are inherent in systems of this type. Moreover, since

-13-

the apparatus minimizes the use of circuit components which are themselves subject to drift, variation and spurious fluctuations, improved performance is assured.

Though the exemplary embodiments of the invention disclosed herein are preferred, it is expected that those skilled in the art will devise many variations and modifications which do not part from the true scope of the invention. All such variations and modifications are intended to be covered by the appended claims.

CLAIMS:

1.    An apparatus for analyzing the constituent components of a fluid by exposing a substantially isolated component of said fluid to a beam of light for optical analysis comprising:

light responsive means responsive to said beam of light, for producing first and second information signals having parameters corresponding to the effects of said beam of light passing through said component at different selected wavelengths;

electronic means for producing first and second offset signals having parameters corresponding to errors in said information signals;

first signal operation means, having a first input coupled to said light responsive means for receiving said first information signal and a second input coupled to said electronic means for receiving said first offset signal, said first signal operation means producing at its output a first corrected information signal corresponding to the difference between the parameters of said first information signal and said first offset signal;

second signal operation means, having a first input coupled to said light responsive means for receiving said second information signal and a second input coupled to said electronic means for receiving said second offset signal, said second signal operation means producing at its output a second corrected information signal corresponding to the difference between the parameters of said second information signal and said second offset signal; and

signal generation means having a first input coupled to the output of said first signal operation

0167816

means for receiving said first corrected information signal and a second input coupled to the output of said second signal operation means for receiving said second corrected information signal, said signal generation means producing at its output a signal corresponding to the analysis of said component of said fluid.

2. The apparatus defined in Claim 1 wherein said first and said second signal operation means include operational amplifiers.

3. The apparatus defined in Claim 2 wherein each of said operational amplifiers produce, at their respective outputs, a signal corresponding to the arithmetic difference between the signals applied at their respective pair of inputs.

4. The apparatus defined in Claim 1 wherein said light responsive means include a diode array adapted to produce a plurality of signals each corresponding to the intensity of the light passing through said component at different wavelengths, a first multiplexer coupled to said array having a plurality of inputs each being adapted to receive one of said signals from said array, and a second multiplexer coupled to said array having a plurality of inputs each being also adapted to receive one of said signals from said array; said first multiplexer being adapted to produce an output signal corresponding to a selected one of said signals received from said array, and said second multiplexer being adapted to produce an output signal corresponding to a different selected one of said signals received from said array.

-16-  0167816

5.  The apparatus defined in Claim 4 wherein each diode in said array is responsive to light passing through said component at a predetermined wavelength.

6.  The apparatus defined in Claim 1 wherein said signal generation means include logarithmic ratio circuitry, whereby the output thereof corresponds to the logarithm of the ratio of the first corrected information signal and the second corrected information signal.

7.  The apparatus defined in Claim 1 wherein said electronic means include memory means for storing data regarding the parameters of said first and second offset signals prior to the application of said beam of light to said light responsive means.

8.  The apparatus defined in Claim 7 wherein first and second offset signals are locally generated reference signals stored in said memory means.

9.  A method for a analyzing the constituent components of a fluid by exposing a substantially isolated component of said fluid to a beam of light and diffracting said light into discrete rays each having a different wavelength comprising the following steps:
a.  producing a first and a second information signal, each having a parameter corresponding to the intensity of a different one of said rays;
b.  locally generating a first and a second offset signal each having a parameter corresponding, respectively, to errors in said first and second information signals;
c.  producing first and second corrected information signals, corresponding, respectively, to the differences between the parameters of said first information signals and said first offset signal, and the parameters of said second information signal and said second offset signal; and

    d.    applying said second corrected information signals to means for producing an output signal indicative of the characteristics of said isolated component.

10.    The method defined in Claim 9 wherein said output signal is the logarithm of the ratio of said first and second corrected information signals.

1/2

_FIG. 1_

_FIG. 2_

FIG. 3

LIGHT RESPONSIVE MEANS

MULTI-PLEX

SIGNAL GENER-ATION MEANS

ELECTRONIC MEANS

D TO A

MEM-ORY

2/2

0167816